# FASCICULE DE BREVET EUROPEEN

(11) **EP 0 737 358 B1**
(45) Date de publication et mention de la délivrance du brevet: **03.02.1999**
(21) Numéro de dépôt: 95902915.8
(22) Date de dépôt: 28.12.1994
(51) Int. Cl.: H01G 9/20

(54) **PILE PHOTO-ELECTROCHIMIQUE ET ELECTROLYTE POUR CETTE PILE**
PHOTOELEKTROCHEMISCHE ZELLE UND ELEKTROLYT FÜR DIESE ZELLE
PHOTOELECTROCHEMICAL CELL AND ELECTROLYTE THEREFOR

(30) Priorité: 29.12.1993 CH 3889/93
(43) Date de publication de la demande: 16.10.1996
(73) Titulaire: ECOLE POLYTECHNIQUE FEDERALE DE LAUSANNE, 1015 Lausanne (CH)
(72) Inventeur: ATHANASSOV, Yordan, CH-1008 Prilly (CH); BONHOTE, Pierre, CH-2068 Hauterive (CH); GRAETZEL, Michael, CH-1025 Saint Sulpice (CH)
(74) Mandataire: Ganguillet, Cyril
(86) Numéro de dépôt international: IB9400445
(87) Numéro de publication internationale: WO9518456

(56) Documents cités:
- EP-A- 0 333 641
- PROCEEDINGS OF THE 16TH INTERSOCIETY ENERGY CONVERSION ENGINEERING CONFERENCE. 'TECHNOLOGIES FOR THE TRANSITION'. 9-14 AUGUST 1981, ATLANTA ,US pages 779 - 782 K.RAJESHWAR ET AL. 'MOLTEN SALT ELECTROLYTES FOR PHOTOELECTROCHEMICAL APPLICATIONS'
- NATURE, vol.353, 24 Octobre 1991, LONDON GB pages 737 - 740 B.O'REGAN ET AL. 'A LOW-COST, HIGH-EFFICIENCY SOLAR CELL BASED ON DYE-SENSITIZED COLLOIDAL TI02 FILMS'

## Description

L'invention concerne une pile photo-électrochimique régénératrice comprenant une photoanode constituée par au moins une couche d'oxyde métallique semi-conducteur, sur un substrat conducteur, une contre-électrode, ainsi qu'un électrolyte liquide contenu entre ces électrodes, au moins l'une de ces électrodes étant transparente ou translucide et ledit électrolyte étant essentiellement constitué par un mélange d'au moins un sel électrochimiquement actif et d'au moins une espèce moléculaire formant un système oxydo-réducteur avec l'anion ou le cation de ce sel.

L'invention concerne notamment une pile de ce genre dans laquelle ladite couche d'oxyde métallique semi-conducteur est polycristalline, en particulier une pile dans laquelle cette couche est constituée de dioxyde de titane TiO₂ nanocristallin, sensibilisé par au moins une substance chromophore, la surface de la photoanode en contact avec l'électrolyte étant poreuse avec un facteur de porosité de préférence au moins égal à 20.

Le terme "nanocristallin" signifie que l'oxyde métallique semi-conducteur, en l'occurrence l'oxyde de titane, est sous forme polycristalline avec des dimensions de grains de l'ordre de quelques nanomètres, par exemple de 10 à 50 nanomètres.

Le "facteur de porosité" est défini comme étant le rapport de la surface photo-électrochimiquement active de la photoanode à la surface du substrat recouverte par la, ou les, couche(s) d'oxyde métallique semi-conducteur.

On connaît déjà des piles de ce genre, notamment celle qui est décrite dans le brevet US No. 4,927,721 et celle qui est décrite dans la demande de brevet internationale WO 91/16719.

Jusqu'à présent, on a utilisé dans une telle pile des électrolytes liquides comprenant une solution d'un système oxydo-réducteur constitué par un mélange d'au moins un sel ayant un point de fusion supérieur à la température ambiante, avec au moins une molécule correspondant à l'anion de ce sel, dans un solvant ou un mélange de solvants, tel qu'au moins un solvant organique polaire ayant une constante diélectrique élevée, ou dans un milieu aqueux fortement acide.

Par exemple, le système oxydo-réducteur est constitué par une solution 0,5 M d'iodure de tétrapropylammonium et 40 mM d'iode et le solvant est un mélange d'éthylènecarbonate et d'acétonitrile.

On a constaté que les piles photo-électrochimiques régénératrices utilisant un électrolyte du genre qui vient d'être mentionné sont susceptibles de présenter divers inconvénients en relation avec la nature et les propriétés d'un tel électrolyte, en particulier les inconvénients suivants:
- En raison de la volatilité des solvants entrant en ligne de compte pour constituer l'électrolyte, il peut se produire, si l'étanchéité du compartiment électrolytique n'est pas parfaite, une évaporation du solvant pouvant entraîner l'arrêt du fonctionnement de la pile ("mort de la pile");
- En cas de fonctionnement de la pile à température inférieure à la température ambiante, par exemple de l'ordre de -10°C à -30°C, il peut se produire une précipitation du sel sous forme d'un solide cristallin, ce qui se traduit par une diminution considérable des performances de la pile à une telle température;
- On peut, en outre, éventuellement constater une diminution progressive des performances de la pile, à une température constante donnée, telle que la température ambiante, résultant d'une instabilité de l'électrolyte pouvant être attribuée à la décomposition des solvants utilisés ou encore à des réactions chimiques parasites entre les constituants du système redox et les solvants;
- Enfin, dans le cas où le solvant comprend du carbonate d'éthylène ou de propylène, il peut y avoir formation de substances à l'état gazeux, telles que du dioxyde de carbone, également par suite de la décomposition du solvant ou de réactions secondaires entre celui-ci et les éléments du système redox, avec pour conséquence non seulement une diminution des performances de la pile, mais encore un risque d'explosion de celle-ci.

La présente invention vise, de façon générale, à éliminer lesdits inconvénients et plus particulièrement à améliorer la stabilité des performances de la pile dans le temps, ainsi qu'en fonction de la température de fonctionnement.

A cet effet, la pile selon l'invention est caractérisée en ce que le sel électrochimiquement actif a un point de fusion inférieur à la température ambiante ou le mélange formé par ce sel et ladite espèce moléculaire dudit système oxydo-réducteur a un point de fusion inférieur à la température ambiante.

L'invention a également pour objet un électrolyte pour cette pile défini dans la revendication 4.

Conformément à une première forme d'exécution de l'électrolyte, celui-ci consiste dans le produit obtenu par adjonction à un sel ayant un point de fusion inférieur à la température ambiante, ou à un mélange de plusieurs sels de ce genre, d'au moins une espèce moléculaire ou d'un élément à l'état neutre constituant un système redox avec au moins un ion de ce sel ou de ces sels.

Par exemple, ledit ion est l'ion iodure I⁻ et ledit élément est l'iode.

Selon une variante de cette première forme d'exécution, la première espèce du couple constituant le système oxydo-réducteur comprend au moins un sel, ayant un point de fusion inférieur à la température ambiante, et l'on utilise ce sel en solution dans au moins un autre sel, ayant également un point de fusion inférieur à la température ambiante, seul le premier sel susmentionné étant électrochimiquement actif dans le domaine de potentiel de fonctionnement de la pile alors que l'autre sel est, lui, électrochimiquement inactif dans ce domaine de potentiel.

Conformément à une autre forme d'exécution, l'électrolyte comprend, comme première espèce du couple constituant le système oxydo-réducteur, au moins un sel ayant un point de fusion supérieur à la température ambiante mais formant une phase liquide, à cette même température, en présence de la seconde espèce dudit couple.

L'électrolyte selon l'une quelconque des formes d'exécution ou variante mentionnées ci-àessus peut être utilisé soin tel quel, soit sous forme diluée dans un solvant liquide approprié, tel ou'un milieu aqueux ou un solvant organique polaire, ayant une constante diélectrique élevée, ou un mélange de tels solvants.

On obtient ainsi notamment les avantages suivants:
- Dans le cas où l'on utilise l'électrolyte en l'absence de solvant liquide, l'électrolyte a une tension de vapeur extrêmement faible, ce qui élimine ou rend minime le risque d'évaporation mentionné plus haut à propos des électrolytes de l'art antérieur;
- Toujours dans le cas où l'électrolyte est exempt de solvant liquide, on élimine le risque de diminution des performances qui résulte de la précipitation du ou des sels cristallins dans les solutions électrolytiques conformes à l'art antérieur;
- Dans le cas où l'on utilise l'électrolyte sous forme diluée dans un solvant liquide, une éventuelle séparation de phase, lors d'un fonctionnement de la pile à basse température, se traduit par la présence de deux phases liquides qui assurent chacune le fonctionnement de la pile, de manière indépendante. Par conséquent, les performances de la pile ne diminuent que dans une mesure beaucoup plus faible que lors de la précipitation de sel cristallin observée dans les électrolytes antérieurement connus;
- La proportion de solvant éventuellement utilisé est, de toute façon, nettement inférieure à celle des électrolytes de l'art antérieur, ce qui est un facteur contribuant à l'amélioration de la stabilité de l'électrolyte;

Comme sel ayant un point de fusion inférieur à la température ambiante, on peut notamment utiliser un sel choisi parmi ceux dont le cation est constitué d'un ou plusieurs groupes comportant au moins un atome d'azote quaternaire et ceux dont le cation est constitué d'un ou plusieurs groupes comportant un atome de soufre ternaire ou un atome de phosphore quaternaire.

Ledit cation peut être notamment choisi parmi les groupements du type imidazolium de formule générale: 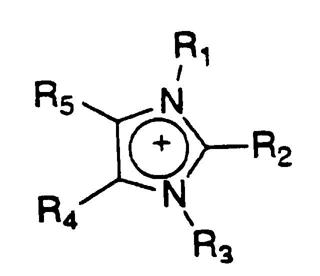 dans laquelle les groupes R₁, R₂, R₃, R₄ et R₅ sont identiques ou différents et sont choisis parmi l'hydrogène et les groupes alkyles linéaires ou ramifiés, ayant de 1 à 20 atomes de carbone, les groupes alkoxy linéaires ou ramifiés ayant de 1 à 20 atomes de carbone, les dérivés de substitution fluorés de groupes alkyles ayant de 1 à 20 atomes de carbone, les groupes alcényles, les groupes alcinyles, ainsi que les combinaisons de ces groupes et les halogénures correspondants, ou encore parmi les groupes alcoxyalkyles et polyéthers.

Le cation peut également être choisi parmi les groupements du type triazolium ou phosphonium correspondant, respectivement, aux formules générales: 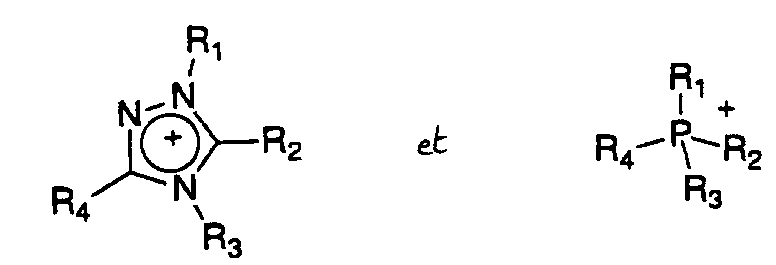 dans lesquelles les groupes R1, R2, R3 et R4 ont les mêmes significations que celles indiquées ci-dessus.

Le cation peut encore être choisi parmi les groupements de formule générale: 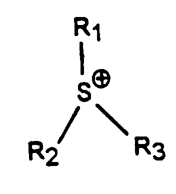 dans laquelle les groupes R₁, R₂, R₃ ont les significations indiquées ci-dessus.

Il est à noter que les groupements qui viennent d'être indiqués constituent des exemples non limitatifs.

On peut également utiliser des mélanges ou combinaisons contenant au moins deux sels de ce genre, ou encore des mélanges ou combinaisons, liquides à la température ambiante, d'au moins un sel de ce genre avec au moins un sel qui cristallise à la température ambiante. On peut notamment utiliser des mélanges d'un sel électrochimiquement actif, mais relativement visqueux, avec au moins un sel plus fluide, inerte électrochimiquement.

L'anion associé à un ou plusieurs cations appropriés, dans les sels électrochimiquement actifs ayant un point de fusion inférieur à la température ambiante peut notamment consister en un ion halogénure, plus particulièrement un chlorure, iodure ou bromure, ou en un ion polyhalogénure, ou encore en un anion complexe contenant au moins un ion halogénure.

En particulier, un tel ion polyhalogénure peut être un ion obtenu par adjonction à un halogénure d'une certaine quantité de l'halogène correspondant.

L'anion associé à un ou plusieurs cations, dans les sels électrochimiquement inactifs ayant un point de fusion inférieur à la température ambiante, peut être, notamment, choisi parmi les anions du type perfluoroalcanesulfonate, tels que l'ion trifluorométhanesulfonate CF₃SO₃⁻, ou encore ceux du type perfluoroalcanoate, tels que l'ion trifluoroacétate CF₃COO⁻ et ceux du type tris-(perfluoroalcanesulfone)carbures, tels que l'ion tris-(trifluorométhanesulfone)carbure (CF₃SO₂)₃C⁻.

Par exemple, on peut utiliser comme sel électrochimiquement actif ayant un point de fusion inférieur à la température ambiante, au moins l'un des sels suivants:
Iodure de 1-hexyl-3-méthylimidazolium
Iodure de 1-pentyl-3-méthylimidazolium;
Iodure de 1-butyl-3-méthylimidazolium;
Iodure de 1-isobutyl-3-méthylimidazolium;
Iodure de 1-hexyl-3-vinylimidazolium;
Bromure de 3-méthyl-1-pentylimidazolium;
Bromure de 1-heptyl-3-méthylimidazolinium.

Comme sel électrochimiquement inactif ayant un point de fusion inférieur à la température ambiante, on peut, notamment, utiliser au moins l'un des sels suivants :
trifluorométhanesulfonate de 1-éthyl 3-méthylimidazolium
trifluorométhanesulfonate de 1-butyl 3-méthylimidazolium
trifluoroacétate de 1,3-diméthylimidazolium
trifluoroacétate de 1-éthyl 3-méthylimidazolium
trifluoroacétate de 1-butyl 3-méthylimidazolium
trifluoroacétate de 1,3-diéthylimidazolium
trifluoroacétate de 1-éthyl 3-butylimidazolium
perfluorobutanoate 1-éthyl 3-méthylimidazolium
perfluorobutanoate de 1-butyl 3-méthylimidazolium

Comme solvant éventuel pour diluer le mélange d'au moins un sel ayant un point de fusion inférieur à la température ambiante, avec ladite molécule ou ledit élément formant un système redox avec ledit sel ou ladite pluralité de sels, on peut notamment utiliser l'eau ou au moins un solvant organique choisi parmi les composés suivants: alcools, notamment l'éthanol et le butanol; nitriles, notamment l'acétonitrile et le butyronitrile; tétraméthylurée; composés hétérocycliques contenant au moins un atome d'azote et/ou d'oxygène dans l'hétérocycle, notamment la 3-méthyl-2-oxazolidinone, la 1,3-diméthyl -3, 4, 5, 6-tétrahydro-2(1H)-pyrimidone, la 1-méthyl-2-pyrolidone et la diméthylimidazolidinone; le diméthylsulfoxyde; le sulfolane; les cétones supérieures (ex.: pentanone-3).

### Exemple 1:

### Système redox: Iodure de 1-hexyl-3-méthylimidazolium/iode.

On prépare l'iodure de 1-hexyl-3-méthylimidazolium en diluant 0,1 mole de 1-méthylimidazole dans 100 ml de 1,1,1-trichloroéthane et en y ajoutant ensuite, goutte à goutte, sous forte agitation, une solution de 0,1 mole de 1-iodohexane, fraîchement distillé, dans 100 ml de 1,1,1-trichloroéthane. On porte ensuite à reflux, pendant 2h, le mélange ainsi obtenu. On obtient ainsi l'iodure de 1-hexyl-3-méthylimidazolium sous forme d'un produit liquide huileux, insoluble dans le trichloroéthane que l'on sépare du milieu réactionnel par décantation et que l'on lave deux fois avec 50 ml de trichloroéthane. Finalement, on sèche le produit pendant 2 heures à 80°C, sous pression réduite à 0,2 mbar.

On forme ensuite le système redox par mélange de 75 parties en poids de l'huile ainsi obtenue avec 25 parties en poids d'iode.

On utilise tel quel (sans solvant) le produit ainsi obtenu comme électrolyte dans une pile photo-électrochimique régénératrice ayant les caractéristiques suivantes:
- Surface d'électrodes: 0,24 cm²
- Nature de l'anode: film de 7 micromètre de dioxyde de titane TiO₂ sous forme de "nanoparticules" ayant une granulométrie de 20 nm, sensibilisé à l'aide du complexe RuL₂SCN₂ dans lequel le symbole L représente le groupement 2,2'-bipyridyl-4-4'-dicarboxylate
- Nature de la contre-électrode: verre conducteur à l'oxyde d'étain SnO₂, recouvert d'une couche transparente conductrice de platine.

On obtient les résultats suivants pour une illumination de la pile par une lumière solaire d'une puissance spécifique de 1/10 soleil (80 watts/m²), et une température de fonctionnement de la pile de: 20°C:
- Courant à circuit ouvert: 200 µA
- Tension à circuit ouvert: 520 mV
- Rendement: 4%

### Exemple 2:

Electrolyte: mélange de 1 partie, en volume, d'un premier système redox constitué de 95 parties, en poids, d'iodure de 1-hexyl-3-méthylimidazolium et 5 parties en poids, d'iode et de 2 parties en volume, d'un second système redox constitué d'une solution de 0,3 mole d'iodure de lithium LiI et 30 mmole d'iode dans la 3-méthyl-2-oxazolidinone.

En utilisant ce mélange en solution dans la 3-méthyl-2-oxazolidinone, comme électrolyte dans une pile photo-électrochimique régénératrice ayant des électrodes de même nature que la pile de l'exemple 1, mais ayant une surface de 0,33 cm², avec illumination par le rayonnement solaire, sous une puissance spécifique de 1/10 soleil (80 watts/m²) et une température de fonctionnement de 20°C, on obtient les résultats suivants:
- courant à circuit ouvert: 330 µA
- tension à circuit ouvert:640 mV
- rendement: 7,8%

On a constaté que les performances des piles décrites dans les exemples 1 et 2 restent essentiellement inaltérées pendant une période de fonctionnement ininterrompu à température constante de +25°C, de 60 jours.

## Revendications

1. Pile photo-électrochimique régénératrice comprenant une photoanode, constituée par au moins une couche d'oxyde métallique semi-conducteur, sur un substrat conducteur, une contre-électrode, et un électrolyte liquide contenu entre ces électrodes, au moins l'une de ces électrodes étant transparente ou translucide et ledit électrolyte étant essentiellement constitué par un mélange d'au moins un sel électrochimiquement actif et au moins une espèce moléculaire formant un système oxydo-réducteur avec l'anion ou le cation de ce sel, caractérisée en ce que ledit sel électrochimiquement actif a un point de fusion inférieur à la température ambiante, ou en ce que le mélange formé par ce sel et ladite espèce moléculaire du système oxydo-réducteur a un point de fusion inférieur à la température ambiante.

2. Pile selon la revendication 1, caractérisée en ce que ladite couche d'oxyde métallique semi-conducteur est polycristalline.

3. Pile selon la revendication 2, caractérisée en ce que ladite couche d'oxyde métallique semi-conducteur est constituée d'oxyde de titane TiO₂ nanocristallin sensibilisé par au moins une substance chromophore.

4. Electrolyte liquide pour la pile selon la revendication 1, cet électrolyte étant essentiellement constitué par un mélange d'au moins un sel électrochimiquement actif et au moins une espèce moléculaire formant un système oxydo-réducteur avec l'anion ou le cation de ce sel, caractérisé en ce que ledit sel électrochimiquement actif a un point de fusion inférieur à la température ambiante, ou en ce que le mélange formé par ce sel et ladite espèce moléculaire du système oxydo-réducteur a un point de fusion inférieur à la température ambiante.

5. Electrolyte selon la revendication 4, caractérisé en ce cu'il comprend un mélange d'au moins un sel électrochimiquement actif, ayant un point de fusion inférieur à la température ambiante, ce sel constituant la première espèce dudit système oxydo-réducteur, avec au moins un sel électrochimiquement inactif avant également un point de fusion inférieur à la température ambiante.

6. Electrolyte selon l'une des revendications 4 et 5, caractérisé par le fait que le cation dudit sel électrochimiquement actif est constitué d'au moins un groupe comportant au moins un atome d'azote quaternaire.

7. Electrolyte selon la revendication 6, caractérisé en ce que ledit groupe comportant au moins un atome d'azote quaternaire est choisi parmi les groupements du type, imidazolium et triazolium, correspondant, respectivement, aux formules générales : 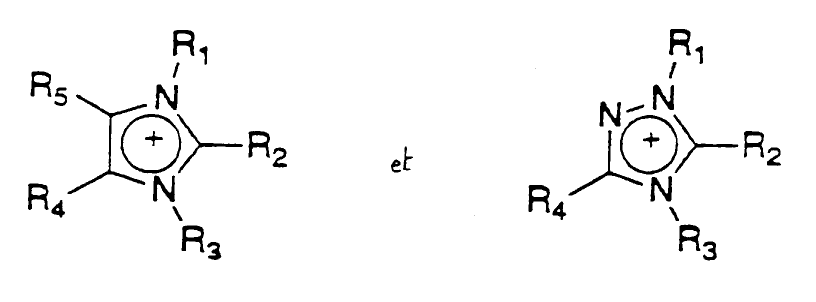 dans lesquelles les groupes R1, R2, R3, R4 et R5 sont identiques ou différents et sont choisis parmi les groupes alkyles linéaires ou ramifiées, ayant de 1 à 20 atomes de carbone, les groupes alkoxy linéaires ou ramifiés ayant de 1 à 20 atomes de carbone, les dérivés de substitution fluorés de groupes alkyles ayant de 1 à 20 atomes de carbone, les groupes alcényles, les groupes alcinyles, ainsi que les combinaisons de ces groupes et les halogénures correspondants, ou encore parmi les groupes alcoxyalkyles et polyéthers, chacun des groupes R2, R4 et R5 pouvant également représenter l'hydrogène.

8. Electrolyte selon l'une des revendications 4 et 5, caractérisé par le fait que le cation dudit sel électrochimiquement actif est constitué d'au moins un groupe comportant un atome de soufre ternaire.

9. Electrolyte selon la revendication 5, caractérisé en ce que le cation dudit sel électrochimiquement actif est constitué d'au moins un groupe comportant un atome de phosphore quaternaire.

10. Electrolyte selon la revendication 9, caractérisé en ce que ledit groupe est un groupe phosphonium correspondant à la formule générale : 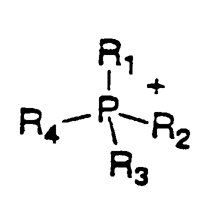 dans laquelle les groupes R1, R2, R3 et R4 ont la même signification que celle indiquée dans la revendication 7.

11. Electrolyte selon l'une des revendications 4 à 10, caractérisé par le fait que l'anion dudit sel électrochimiquement actif est un ion halogénure.

12. Electrolyte selon d'une des revendications 4 à 10, caractérisé par le fait que l'anion dudit sel électrochimiquement actif est un ion polyhalogénure.

13. Electrolyte selon l'une des revendications 4 à 10, caractérisé par le fait que l'anion dudit sel électrochimiquement actif est un anion complexe contenant au moins un halogénure.

14. Electrolyte selon la revendication 5, caractérisé en ce que ledit sel électrochimiquement inactif ayant un point de fusion inférieur à la température ambiante comprend au moins un cation tel que spécifié dans l'une des revendications 8 à 10 associé à un anion choisi parmi les anions des types suivants : perfluoroalcanesulfonate, perfluoroalcanoate et tris(perfluoroalcanesulfone)carbure.

15. Electrolyte selon la revendication 14, caractérisé en ce que ledit anion est choisi parmi les suivants : l'ion trifluorométhanesulfonate CF₃SO₃⁻ ; l'ion trifluoroacétate CF₃COO⁻ ; l'ion tris-(trifluorométhanesulfone)carbure (CF₃SO₂)₃C⁻.

16. Electrolyte selon l'une des revendications 4 à 15, caractérisé par le fait qu'il est sous forme diluée dans un moins un solvant.

17. Electrolyte selon la revendication 16, caractérisé par le fait que ledit solvant est choisi parmi l'eau et les composés suivants: éthanol, butanol, acétonitrile, butyronitrile, tétraméthylurée; 3-méthyl-2-oxazolidone; 1,3-diméthyl-3, 4, 5, 6-tétrahydro -2/1H)-pyrimidone; diméthylimidazolidinone et 1-méthyl-2-pyrolidinone, le diméthylsulfoxyde, le sulfolane, les cétones supérieures et les mélanges d'au moins deux de ces composés.

18. Electrolyte selon la revendication 4, caractérisé par le fait qu'il comprend, comme première espèce du couple constituant le système oxydo-réducteur, au moins un sel ayant la propriété de cristalliser à l'état solide à la température ambiante mais formant une phase liquide, à cette température, en présence de la seconde espèce dudit couple.

19. Electrolyte selon la revendication 4, caractérisé par le fait que ledit système oxydo-réducteur comprend au moins deux sels, ayant un point de fusion inférieur à la température ambiante, dont les anions forment un couple de deux halogénures différents.

20. Electrolyte selon la revendication 19, caractérisé par le fait que ledit couple d'halogénures est le couple iodure/bromure.

21. Electrolyte selon la revendication 4, caractérisé en ce que ledit système oxydo-réducteur comprend au moins deux sels électrochimiquement actifs et en ce qu'il est à l'état dissous dans au moins un sel électrochimiquement inactif ayant un point de fusion inférieur à la température ambiante.

## Patentansprüche

1. Regenerierbare photoelektrochemische Zelle, die eine Photoanode, die aus wenigstens einer Metalloxidhalbleiterschicht auf einem leitfähigem Substrat besteht, eine Gegenelektrode und einen flüssigen Elektrolyten umfaßt, der zwischen diesen Elektroden enthalten ist, wobei wenigstens eine dieser Elektroden transparent oder lichtdurchlässig ist und der besagte Elektrolyt im wesentlichen aus einem Gemisch aus wenigstens einem aktiven elektrochemischen Salz und wenigstens einer Molekülart besteht, die ein Redox-System mit dem Anion oder dem Kation des Salzes bildet, dadurch gekennzeichnet, daß das besagte aktive elektrochemische Salz einen Schmelzpunkt unterhalb der Umgebungstemperatur aufweist oder daß das Gemisch, das durch dieses Salz und die besagte Molekülart des Redox-Systems gebildet wird, einen Schmelzpunkt unterhalb der Umgebungstemperatur aufweist.

2. Zelle nach Anspruch 1, dadurch gekennzeichnet, daß die besagte Metalloxidhalbleiterschicht polykristallin ist.

3. Zelle nach Anspruch 2, dadurch gekennzeichnet, daß die besagte Metalloxidhalbleiterschicht aus nanokristallinem Titanoxid TiO₂ besteht, das durch wenigstens eine chromophore Substanz lichtempflindlich gemacht ist.

4. Flüssiger Elektrolyt für eine Zelle nach dem Anspruch 1, wobei dieser Elektrolyt mit wesentlichen aus einem Gemisch aus wenigstens einem aktiven elektrochemischen Salz und wenigstens einer Molekülart besteht, die ein Redox-System mit dem Anion oder dem Kation des Salzes bildet, dadurch gekennzeichnet, daß das besagte aktive elektrochemische Salz einen Schmelzpunkt unterhalb der Umgebungstemperatur aufweist oder das Gemisch, das durch dieses Salz und die besagte Molekülart des Redox-Systems gebildet wird, einen Schmelzpunkt unterhalb der Umgebungstemperatur aufweist.

5. Elektrolyt nach Anspruch 4, dadurch gekennzeichnet, daß er ein Gemisch wenigstens eines aktiven elektrochemischem Salzes, das einen Schmelzpunkt unterhalb der Umgebungstemperatur aufweist, wobei dieses Salz eine erste Art des besagten Redox-Systems bildet, mit wenigstens einem inaktiven elektrochemischen Salz umfaßt, das gleichfalls einen Schmelzpunkt unterhalb der Umgebungstemperatur aufweist.

6. Elektrolyt nach einem der Ansprüche 4 und 5, dadurch gekennzeichnet, daß das Kation des besagten aktiven elektrochemischen Salzes aus wenigstens einer Gruppe besteht, die wenigstens ein quaternäres Stickstoffatom aufweist.

7. Elektrolyt nach Anspruch 6, dadurch gekennzeichnet, daß die besagte Gruppe wenigstens ein quaternäres Stickstoffatom aufweist, das aus einer Gruppe vom Imidazolium- bzw. Triazolium-Typ nach den allgemeinen Formeln ausgewählt wird: 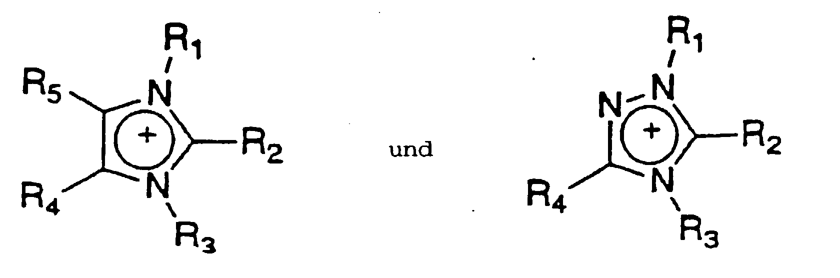 worin die Gruppen R1, R2, R3, R4 und R5 identisch oder unterschiedlich sind und ausgewählt werden aus linearen oder verzweigten Alkylgruppen, die 1 bis 20 Kohlenstoffatome aufweisen, linearen oder verzweigten Alkoxygruppen, die 1 bis 20 Kohlenstoffatome aufweisen, fluorsubstituierten Derivaten von Alkylgruppen, die 1 bis 20 Kohlenstoffatome aufweisen, Alkenylgruppen, Alkinylgruppen sowie Kombinationen dieser Gruppen und entsprechenden Halogeniden oder auch aus Alkoxyalkylgruppen und Polyethern, wobei die Gruppen R2, R4 und R5 jeweils auch durch Wasserstoff gebildet sein können.

8. Elektrolyt nach einem der Ansprüche 4 und 5, dadurch gekennzeichnet, daß das Kation des besagten aktiven elektrochemischen Salzes aus wenigstens einer Gruppe besteht, die ein ternäres Schwefelatom aufweist.

9. Elektrolyt nach Anspruch 5, dadurch gekennzeichnet, daß das Kation des besagten aktiven elektrochemischen Salzes aus wenigstens einer Gruppe besteht, die ein quaternäres Phosphoratom aufweist.

10. Elektrolyt nach Anspruch 9, dadurch gekennzeichnet, daß die besagte Gruppe eines Phosphoniumgruppe ist, die der allgemeinen Formel entspricht: 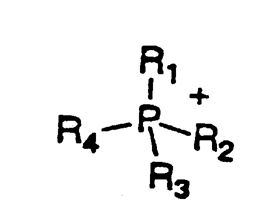 in der die Gruppen R1, R2, R3 und R4 die gleiche Bedeutung haben, wie im Anspruch 7 angegeben.

11. Elektrolyt nach einem der Ansprüche 4 bis 10, dadurch gekennzeichnet, daß das Anion des besagten aktiven elektrochemischen Salzes ein Halogenidion ist.

12. Elektrolyt nach einem der Ansprüche 4 bis 10, dadurch gekennzeichnet, daß das Anion des besagten aktiven elektrochemischen Salzes ein Polyhalogenidion ist.

13. Elektrolyt nach einem der Ansprüche 4 bis 10, dadurch gekennzeichnet, daß das Anion des besagten aktiven elektrochemischen Salzes ein komplexes Anion ist, das wenigstens ein Halogenid enthält.

14. Elektrolyt nach Anspruch 5, dadurch gekennzeichnet, daß das besagte inaktive elektrochemische Salz, das einen Schmelzpunkt unterhalb der Umgebungstemperatur aufweist, wenigstens ein Kation umfaßt, wie es in einem der Ansprüche 8 bis 10 angegeben ist, dem ein Anion zugeordnet ist, das ausgewählt wird aus den Anionen folgender Typen: Perfluoralkansulfonat, Perfluoralkanoat und Tris(perfluoralkansulfon)carbid.

15. Elektrolyt nach Anspruch 14, dadurch gekennzeichnet, daß das besagte Anion unter den folgenden ausgewählt wird: Trifluormethansulfonat-Ion CF₃SO₃⁻; Trifluoracetat-Ion CF₃COO⁻; Tris(trifluormethansulfon)carbid-I on (CF₃SO₂)₃C⁻.

16. Elektrolyt nach einem der Ansprüche 4 bis 15, dadurch gekennzeichnet, daß er in wenigstens einem Lösungsmittel in verdünnter Form vorliegt.

17. Elektrolyt nach Anspruch 16, dadurch gekennzeichnet, daß das besagte Lösungsmittel ausgewählt wird aus Wasser und folgenden Verbindungen: Ethanol, Butanol, Acetonitril, Butyronitril, Tetramethylharnstoff; 3-Methyl-2-oxazolidon; 1,3-Dimethyl-3, 4, 5, 6-tetrahydro -2/1H)-pyrimidon; Dimethylimidazolidinon und 1-Methyl-2-pyrolidinon, Dimethylsulfoxid, Sulfolan, höheren Ketonen sowie Gemischen von wenigstens zwei dieser Verbindungen.

18. Elektrolyt nach Anspruch 4, dadurch gekennzeichnet, daß er als erste Art des Paares, das das Redox-System bildet, wenigstens ein Salz umfasst, das die Eigenschaft hat, bei Umgebungstemperatur in festem Zustand zu kristallisieren, jedoch eine flüssige Phase bei dieser Temperatur in Gegenwart der zweiten Art des besagten Paares bildet.

19. Elektrolyt nach Anspruch 4, dadurch gekennzeichnet, daß das besagte Redox-System wenigstens zwei Salze umfasst, die einen Schmelzpunkt unterhalb der Umgebungstemperatur aufweisen, deren Anionen ein Paar von zwei unterschiedlichen Halogeniden bilden.

20. Elektrolyt nach Anspruch 19, dadurch gekennzeichnet, daß das besagte Halodenidpaar das Paar Jod/Brom ist.

21. Elektrolyt nach Anspruch 4, dadurch gekennzeichnet, daß das besagte Redox-System wenigstens zwei aktive elektrochemische Salze umfaßt und daß er im gelösten Zustand in wenigsten einem inaktiven elektrochemischen Salz vorliegt, das einen Schmelzpunkt unterhalb der Umgebungstemperatur aufweist.

## Claims

1. A regenerative photo-electrochemical cell comprising a photoanode, constituted of at least one layer of semiconductive metal oxide, on a conductive substrate, a counterelectrode, and a liquid electrolyte contained between these electrodes, at least one of these electrodes being transparent or translucent and the said electrolyte being essentially constituted of a mixture of at least one electrochemically active salt and at least one molecular species forming an redox system with the anion or the cation of this salt, characterised in that the said electrochemically active salt has a melting point lower than ambient temperature, or in that the mixture formed by this salt and the said molecular species of the said redox system has a melting point lower than ambient temperature.

2. A cell according to claim 1, characterised in that the said semiconductive metal layer is polycrystalline.

3. A cell according to claim 2, characterised in that the said layer of semiconductive metal oxide is constituted of nanocrystalline titanium oxide TiO₂ sensitised by at least one chromophoric substance.

4. A liquid electrolyte for the cell according to claim 1, this electrolyte being essentially constituted of a mixture of at least one electrochemically active salt and at least one molecular species forming an redox system with the anion or the cation of this salt, characterised in that the said electrochemically active salt has a melting point lower than ambient temperature, or in that the mixture formed by this salt and the said molecular species of the said redox system has a melting point lower than ambient temperature.

5. An electrolyte according to claim 4, characterised in that it comprises a mixture of at least one electrochemically active salt, having a melting point lower than ambient temperature, this salt forming the first species of the said redox system, with at least one electrochemically inactive salt likewise having a melting point lower than ambient temperature.

6. An electrolyte according to one of the claims 4 and 5, characterised by the fact that the cation of the said electrochemically active salt constituted of at least one group comprising at least one quaternary nitrogen atom.

7. An electrolyte according to claim 6, characterised in that the said group comprising at least one quaternary nitrogen atom is selected from imidazolium and triazolium type groupings, corresponding, respectively, to the general formulae: 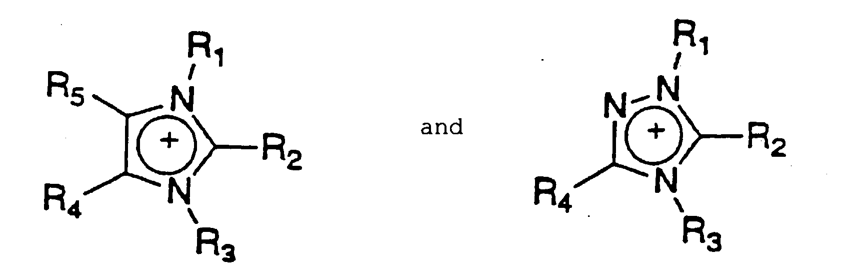 in which the groups R1, R2, R3, R4 and R5 are identical or different and are selected from the linear or branched alkyl groups, having 1 to 20 carbon atoms, the linear or branched alkoxy groups having 1 to 20 atoms of carbon, the fluorinated-substituted alkyl groups derivatives having 1 to 20 carbon atoms, the alkenyl groups, alkinyl groups, and combinations of these groups and the corresponding halides, or selected further from the alkoxyalkyl and polyether groups, each of the groups R2, R4 and R5 also possibly representing hydrogen.

8. An electrolyte according to one of claims 4 and 5, characterised by the fact that the cation of the said electrochemically active salt is constituted of at least one group comprising an ternary sulphur atom.

9. An electrolyte according to claim 5, characterised in that the cation of the said electrochemically active salt is constituted of at least one group comprising a quaternary phosphorus atom.

10. An electrolyte according to claim 9, characterised in that said group is a phosphonium group corresponding to the general formula: 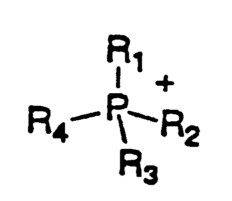 in which the groups R1, R2, R3 and R4 have the same meaning as stated in claim 7.

11. An electrolyte according to one of claims 4 to 10, characterised by the fact that the anion of the said electrochemically active salt is a halide ion.

12. An electrolyte according to one of claims 4 to 10, characterised by the fact that the anion of the said electrochemically active salt is a polyhalide ion.

13. An electrolyte according to one of claims 4 to 10, characterised by the fact that the anion of the said electrochemically active salt is a complex anion containing at least one halide.

14. An electrolyte according to claim 5, characterised in that the said electrochemically inactive salt having a melting point lower than ambient temperature comprises at least one cation as specified in one of claims 8 to 10 associated with an anion selected from anions of the following types: perfluoroalkanesulphonate, perfluoroalkanoate and tris-(perfluoroalkanesulphone)carbide.

15. An electrolyte according to claim 14, characterised in that the said anion is selected from the following: trifluoromethanesulphonate ion CF₃SO₃⁻; trifluoroacetate ion CF₃COO⁻; tris-(trifluoromethanesulphone)carbide ion (CF₃SO₂)₃C⁻.

16. An electrolyte according to one of claims 4 to 15, characterised by the fact that it is in dilute form in at least one solvent.

17. An electrolyte according to claim 16,, characterised by the fact that the said solvent is selected from water and the following compounds: ethanol, butanol, acetonitrile, butyronitrile, tetramethylurea; 3-methyl-2-oxazolidinone, 1,3-dimethyl-3,4,5,6-tetrahydro-2/1H)-pyrimidone, dimethylimidazolidinone and 1-methyl-2-pyrolidinone, dimethylsulphoxide; sulpholane; higher ketones and the mixtures of at least two of these compounds.

18. An electrolyte according to claim 4, characterised by the fact that it comprises, as the first species of the pair forming the redox system, at least one salt having the property of crystallising at solid state at ambient temperature but forming a liquid phase, at this temperature, in the presence of the second species of the said pair.

19. An electrolyte according to claim 4, characterised by the fact that the said redox system comprises at least two salts, with a melting point lower than ambient temperature, of which the anions form a pair of two different halides.

20. An electrolyte according to claim 19, characterised by the fact that the said pair of halides is the pair iodide/bromide.

21. An electrolyte according to claim 4, characterised in that the said redox system comprises at least two electrochemically active salts and in that it is in dissolved state in at least one electrochemically inactive salt having a melting point lower than ambient temperature.
